# EUROPEAN PATENT APPLICATION

(11) **EP 4 113 543 A1**
(43) Date of publication of application: **04.01.2023**
(21) Application number: 21181948.7
(22) Date of filing: 28.06.2021
(51) Int. Cl.: H01B 9/00, A01M 29/10

(54) **CABLE**

(71) Applicant: Lapp Engineering AG, 6330 Cham (CH)
(72) Inventor: Richard, Fabien, 6330 Cham (CH); Reinelt, Attila, 6330 Cham (CH)
(74) Representative: Rutz, Peter

(57) **Abstract**

A cable (10) comprising:
- at least one conductor (1A, 1B, 1C,...);
- at least one conductor insulation layer (2A, 2B, 2C,...) formed around and enclosing said at least one conductor (1A, 1B, 1C,...);
- an outer sheath (4) enclosing said conductor insulation layer (2A, 2B, 2C,...) and said at least one conductor (1A, 1B, 1C,...).

According to the invention, the cable (10) further comprises a light-emitting strand (5), suited to emit light, that is enclosed by said outer sheath (4) and that the outer sheath (4) is at least partially optically transparent to the light emitted by the light-emitting strand (5).

## Description

The present invention relates to a cable with bird protection.

A variety of cables for different types of applications is known from the state of the art.

Cables are often installed and used outdoors, where they are free-hanging between power poles or masts. This poses a risk to birds that can fly into the cables because they are not visible, in particular during the night or other conditions with poor visibility.

The problem of the present invention is to provide an improved cable that reduces the risk of collision for birds.

The inventive solution shall be applicable for any cable structure that has been defined according to given requirements and specifications.

Manufacturing processes and layer material used for conventional cables shall be applicable for manufacturing the cable.

Further, the inventive solution shall be applicable to cables used in various conditions particularly outdoors, in particular to free-hanging cables suspended between power poles.

The problem is solved by a cable according to claim 1 and a bird protection system according to claim 14. Further preferred embodiments of the cable are defined in dependent claims.

The cable comprises
- at least one conductor;
- at least one conductor insulation layer formed around and enclosing the at least one conductor;
- an outer sheath enclosing the conductor insulation layer and the at least one conductor.

According to the invention, the cable further comprises a light-emitting strand, suited to emit light, that is also enclosed by the outer sheath. The outer sheath is at least partially optically transparent to the light emitted by the light-emitting strand. The cable is hence better visible due to the light emitted by the light-emitting strand. Birds will therefore see the cable and not collide with it.

In a preferred embodiment, the light-emitting strand comprises a first insulated conductor and a second insulated conductor.

Preferably, the first insulated conductor and the second insulated conductor are twisted together to form a twisted conductor pair.

In a particularly preferred embodiment of the present invention, the light-emitting strand comprises several light-emitting units. Preferably, the light-emitting units are equally spaced along the cable, particularly preferred with a distance of 0.5-5m between two light emitting units.

In preferred embodiments, the light-emitting strand and the at least one conductor are twisted along the long cable axis. The light-emission of the cable is hence directed in various radial directions, improving the visibility of the cable.

In further preferred embodiments, the light-emitting units each comprise a light-emitting device which is electrically connected through an electrical connection to the first insulated conductor at an electrical contact point and which is electrically connected through an electrical connection to the second insulated conductor at an electrical contact point. An electrical resistance is preferably connected in series with the light-emitting device between the first insulated conductor and the second insulated conductor.

The light-emitting units preferably emit violet visible light. In another embodiment, the light-emitting units emit ultraviolet light. Particularly preferred, the light-emitting units emit light at a wavelength between 350nm and 450nm. Further preferred, the light-emitting units emit light at different wavelengths. This improves the overall visibility of the cable.

The light-emitting unit comprises in a preferred embodiment according to the present invention one or several light-emitting diodes.

In a further embodiment according to the invention, the cable comprises at least two light-emitting strands, each of which suited to emit light, that are both enclosed by the outer sheath.

In another embodiment according to the invention, the cable further comprises an optical fibre and/or one or several fillers and/or an inner sheath. This improves the overall shape or roundness of the cable.

Preferably, the cable comprises several conductors, which are each surrounded by a conductor insulation layer and which are all enclosed within the outer sheath.

The cable may comprise one or several sensors, such as daylight sensors, rain sensors or ultrasound sensors.

The outer sheath is preferably made from an optically transparent PVC-based polymeric material. The optically transparent PVC-based polymeric material preferably comprises a UV-stabilizing additive. The cable lifetime is hence improved.

The light-emitting units are preferably electrically connected in parallel between the first insulated conductor and the second insulated conductor. The light-emitting strand is preferably wrapped in at least one layer of transparent Teflon tape. The light-emitting strand can hence easily be fabricated and then integrated in any cable design.

The conductors are preferably made of stranded or bunched copper conductors.

An inventive cable is preferably part of an equally inventive bird protection system. The bird protection system preferably comprises an inventive cable and a power unit that is suited to power the light-emitting units of the light-emitting strand through a connecting cable.

The present invention will be further described by way of example, with reference to the accompanying drawings, wherein:
- Fig. 1: shows a cross-sectional view of a first embodiment of an inventive cable 10;
- Fig. 2: shows a cross-sectional view of a second embodiment of an inventive cable 10;
- Fig. 3: shows a cross-sectional view of a third embodiment of an inventive cable 10;
- Fig. 4a: shows a preferred embodiment of a light-emitting strand 5 for an inventive cable;
- Fig. 4b: shows a detailed view of area A highlighted in Fig. 4a; and
- Fig. 5: shows an inventive bird protection system 100 for an inventive cable 10 suspended between two power poles 80, 80';

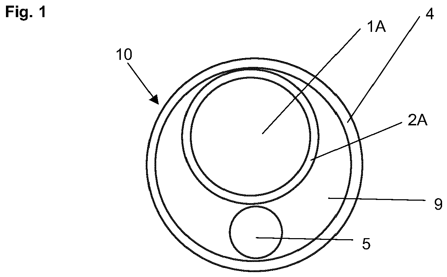

Fig. 1 schematically shows a cross-sectional view of a first embodiment of an inventive cable 10. The cable comprises a conductor 1A which is electrically insulated by a surrounding conductor insulation layer 2A. The cable further comprises a light-emitting strand 5. The light-emitting strand 5 and the conductor 1A, respectively the conductor insulation layer 2A, are embedded in an inner sheath. The conductor 1A, the conductor insulation layer 2A, the light-emitting strand 5 and the inner sheath 9 are enclosed by an outer sheath 4.

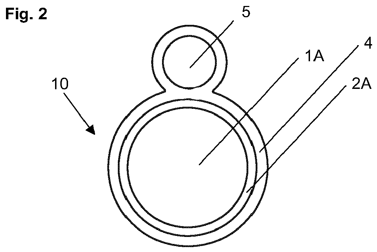

Fig. 2 schematically depicts a cross-sectional view of a second embodiment of an inventive cable 10. The cable comprises a conductor 1A which is electrically insulated by a surrounding conductor insulation layer 2A. The cable further comprises a light-emitting strand 5. The conductor 1A, the conductor insulation layer 2A and the light-emitting strand 5 are enclosed and bound together by an outer sheath 4.

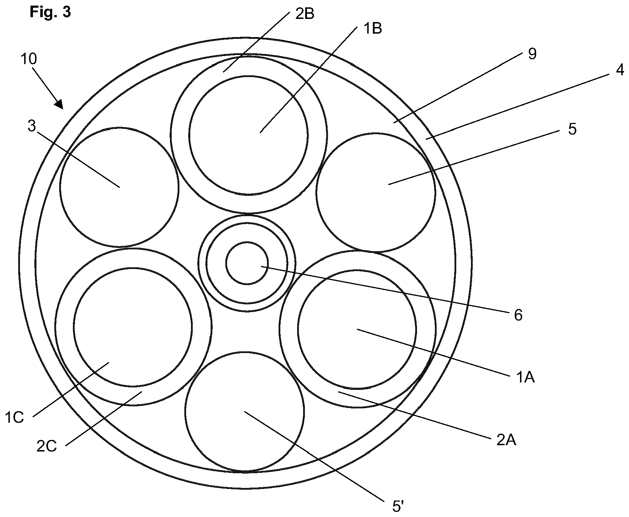

Fig. 3 shows a cross-sectional view of a fifth embodiment of an inventive cable 10. The cable comprises three conductors 1A, 1B, 1C, each electrically insulated by a conductor insulation layer 2A, 2B, 2C. The cable further comprises an optical fibre 6 and a filler 3. The cable comprises two light-emitting strands 5, 5'. All aforementioned components are integrated in an inner sheath 9 which is enclosed in an outer sheath 4.

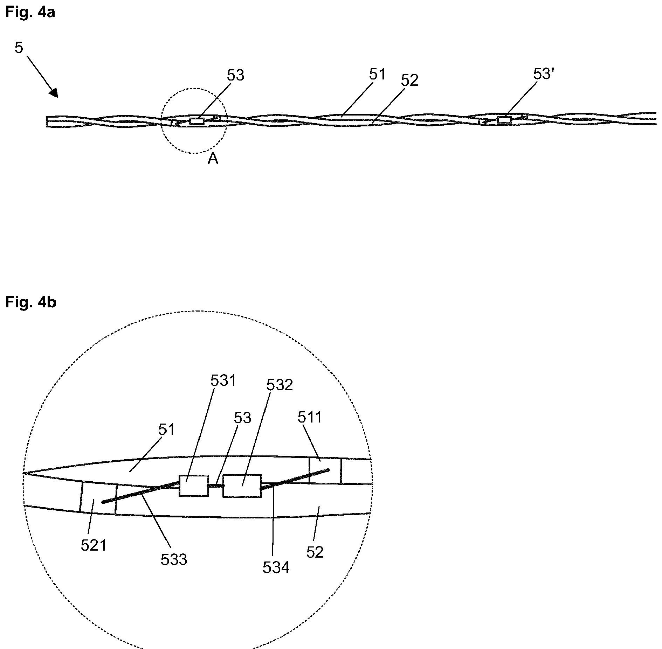

Fig. 4a shows a preferred embodiment of a light-emitting strand 5 for an inventive cable. The light-emitting strand 5 comprises a first insulated conductor 51 and a second insulated conductor 52 that are twisted together. Along the light-emitting strand 5, several light-emitting units 53, 53',... are electrically connected between the first insulated conductor 51 and the second insulated conductor 52.

Fig. 4b shows a detailed view of area A highlighted in Fig. 4a. A light-emitting unit 53 is electrically connected between the first insulated conductor 51 and the second insulated conductor 52. The light-emitting unit 53 comprises an electrical resistance 531 and a light-emitting device 532. The light-emitting unit 53 is electrically connected to the first insulated conductor 51 through an electrical connection 534. The electrical connection 534 is electrically contacting the first insulated conductor 51 at an electric contact point 511. The electric contact point 511 preferably is a short cable portion that has been stripped from the insulation layer. The light-emitting unit 53 is electrically connected to the second insulated conductor 52 through an electrical connection 533. The electrical connection 533 is electrically contacting the second insulated conductor 52 at an electric contact point 521. The electric contact point 521 preferably is a short cable portion that has been stripped from the insulation layer.

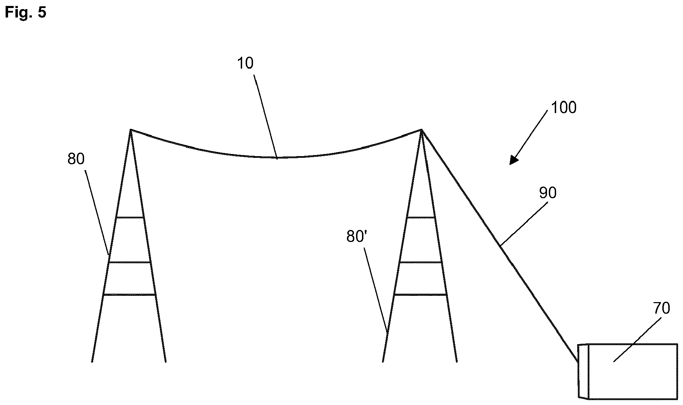

Fig. 5 shows an inventive bird protection system 100 for an inventive cable 10 suspended between two power poles 80, 80'. The cable 10 is free-hanging between the poles 80, 80' at a height at which birds fly. The cable protection system 100 comprises a power unit 60 that is connected through a connecting cable 90 to the cable 10. The power unit 60 is used to power the light-emitting strand of the cable 10.

The embodiments presented in the figures and description are only non-limiting illustrative examples of embodiments according to the invention. Further embodiments according to the invention can be realized by combining technical features from any of the embodiments shown as well as with technical features that are commonly used in cable design.

### List of reference signs

- 1A, 1B, 1C,...: conductor
- 2A, 2B, 2C,...: conductor insulation layer
- 3: filler
- 4: outer sheath
- 5, 5': light-emitting strand
- 51: first insulated conductor
- 511: electrical contact point
- 52: second insulated conductor
- 521: electrical contact point
- 53, 53': light-emitting unit
- 531: electrical resistance
- 532: light-emitting device
- 533: electrical connection
- 534: electrical connection
- 6: optical fibre
- 9: inner sheath
- 10: cable
- 70: power unit
- 80, 80': power poles
- 90: connecting cable
- 100: bird protection system

## Claims

1. A cable (10) comprising:
- at least one conductor (1A, 1B, 1C,...);
- at least one conductor insulation layer (2A, 2B, 2C,...) formed around and enclosing said at least one conductor (1A, 1B, 1C,...);
- an outer sheath (4) enclosing said conductor insulation layer (2A, 2B, 2C,...) and said at least one conductor (1A, 1B, 1C,...);
**characterized in that;**
the cable (10) further comprises a light-emitting strand (5), suited to emit light, that is enclosed by said outer sheath (4) and that the outer sheath (4) is at least partially optically transparent to the light emitted by the light-emitting strand (5).

2. A cable (10) according to claim 1, wherein the light-emitting strand (5) comprises a first insulated conductor (51) and a second insulated conductor (52), the first insulated conductor (51) and the second insulated conductor (52) being preferably twisted together.

3. A cable (10) according to claim 1 or 2, wherein the light-emitting strand (5) comprises several light-emitting units (53, 53',...), which are preferably equally spaced along the cable, preferably with a distance of 0.5-5m between two light emitting units (53, 53'...).

4. A cable (10) according to claim 1, 2 or 3, wherein the light-emitting strand (5) and the at least one conductor (1A, 1B, 1C,...) are twisted along the long cable axis.

5. A cable (10) according to one of the claims 1 - 4, wherein the light-emitting units (53, 53',...) each comprise a light-emitting device (532) which is electrically connected through an electrical connection (533) to the first insulated conductor (51) at an electrical contact point (511) and which is electrically connected through an electrical connection (534) to the second insulated conductor (52) at an electrical contact point (521) and/or that an electrical resistance (531) is connected in series with the light-emitting device (532) between the first insulated conductor (51) and the second insulated conductor (52).

6. A cable (10) according to one of the claims 1 - 5, wherein the light-emitting units (53, 53',...) emit violet visible light and/or the light-emitting units (53, 53',...) emit ultraviolet light and/or the light-emitting units (53, 53',...) emit light at a wavelength between 350nm and 450nm and/or the light-emitting units (53, 53',...) emit light at different wavelengths.

7. A cable (10) according to one of the claims 1 - 6, wherein the light-emitting unit (532) comprises one or several light-emitting diodes.

8. A cable (10) according to one of the claims 1 - 7, wherein the cable (10) comprises at least two light-emitting strands (5, 5'), each of which suited to emit light, that are enclosed by the outer sheath (4).

9. A cable (10) according to one of the claims 1 - 8, wherein the cable (10) further comprises an optical fibre (6) and/or one or several fillers (3) and/or an inner sheath (9) .

10. A cable (10) according to one of the claims 1 - 9, wherein the cable (10) comprises several conductors (1A, 1B, 1C,...) which are each surrounded by a conductor insulation layer (2A, 2B, 2C,...) and which are all enclosed within the outer sheath (4).

11. A cable (10) according to one of the claims 1 - 10, wherein the cable (10) comprises one or several sensors, such as daylight sensors, rain sensors or ultrasound sensors.

12. A cable (10) according to one of the claims 1 - 11, wherein the outer sheath (4) is made from an optically transparent PVC-based polymeric material, the transparent PVC-based polymeric material preferably comprising a UV-stabilizing additive.

13. A cable (10) according to one of the claims 1 - 12, wherein the light-emitting units (53, 53',...) are electrically connected in parallel between the first insulated conductor (51) and the second insulated conductor (52) and/or that the light-emitting strand (5) is wrapped in at least one layer of transparent Teflon tape.

14. A bird protection system (100) comprising a cable (10) according to one of the claims 1 to 13.

15. A bird protection system (100) according to claim 14 comprising a power unit (70) that is suited to power the light-emitting units (53, 53',...) of the light-emitting strand (5) through a connecting cable (90).
